# EUROPEAN PATENT APPLICATION

(11) **EP 4 394 074 A1**
(43) Date of publication of application: **03.07.2024**
(21) Application number: 22940665.7
(22) Date of filing: 10.05.2022
(51) Int. Cl.: C22C 38/02, C22C 38/04

(54) **STEEL PLATE FOR ADVANCED NUCLEAR POWER UNIT EVAPORATOR, AND MANUFACTURING METHOD FOR STEEL PLATE**

(30) Priority: 06.05.2022 CN 202210488680
(71) Applicant: Angang Steel Company Limited, Anshan, Liaoning 114003 (CN)
(72) Inventor: WANG, Yong, Anshan, Liaoning 114021 (CN); WANG, Chu, Anshan, Liaoning 114021 (CN); DUAN, Jiangtao, Anshan, Liaoning 114021 (CN); SUN, Diandong, Anshan, Liaoning 114021 (CN); CONG, Jingong, Anshan, Liaoning 114021 (CN); LI, Liming, Anshan, Liaoning 114021 (CN); CHEN, Jie, Anshan, Liaoning 114021 (CN); AI, Fangfang, Anshan, Liaoning 114021 (CN); SUN, Shaoguang, Anshan, Liaoning 114021 (CN)
(74) Representative: Murgitroyd & Company
(86) International application number: PCT/CN2022/091895
(87) International publication number: WO 2023/212971

(57) **Abstract**

A steel plate for an advanced nuclear power unit evaporator and a manufacturing method for the steel plate. The steel plate includes the following components in percentage by mass: C: 0.10%-0.14%, Si: 0.10%-0.25%, Mn: 0.25%-0.50%, P≤0.006%, S ≤0.002%, Cr: 1.80%-2.10%, Mo: 1.00%-1.35%, Ni: 0.80%-1.20%, Nb: 0%-0.04%, V: 0.05%-0.10%, Ti: 0.03%-0.06%, Alt: 0%-0.02%, Ca: 0.001%-0.004%, N: 0.01%-0.03%, Sn≤0.001%, H≤0.0001%, and O≤0.0020%, with the balance being Fe and inevitable impurities, wherein a high temperature temper embrittlement resistance coefficient J=(Si+Mn)×(P+Sn) ×10⁴≤50. The provided process procedures can ensure the comprehensive performance requirements of the steel plate for an advanced nuclear power unit evaporator.

## Description

### TECHNICAL FIELD

The present disclosure relates to the field of metal materials, and particularly relates to a steel plate for an evaporator of an advanced nuclear power unit and a manufacturing method thereof.

### BACKGROUND

As one of the clean and efficient energy sources in the world, nuclear energy has been used by humans for more than 70 years. Since the beginning of the 21st century, the contradiction between frequent human activities, global economic development and energy shortage, extreme climate has become increasingly prominent. In the context of globalization, the advantages of nuclear energy have become even more prominent. Therefore, the peaceful development of more advanced nuclear energy is still the trend of the times. At present, for the nuclear energy technology, after the development of the first-generation experimental prototype reactor, the second-generation pressurized water reactor, and the third-generation advanced light water reactor, the fourth-generation advanced nuclear technology involving sodium liquid-cooled fast reactor, gas-cooled fast reactor, lead liquid-cooled fast reactor, ultra-high temperature gas-cooled reactor, molten salt reactor, and supercritical water-cooled reactor has been proposed by global nuclear energy experts, becoming a development direction of nuclear power technology in the future.

The fourth generation nuclear energy technology has the main characteristics of better safety, better economy, less nuclear waste, and effective prevention of nuclear diffusion, which puts very high requirements on nuclear technology and nuclear equipment. For example, the outlet temperature of the evaporator reaches a high temperature of 530°C, which has proposed very high technical index requirements on the steel used for evaporator manufacturing. Therefore, the development of key nuclear equipment and key nuclear materials meeting the requirements of the fourth-generation advanced nuclear power station becomes a core problem which needs to be solved urgently in the global nuclear energy countries nowadays.

The disclosed invention patent titled "Method for Refining Large Forging Steel Grains of Nuclear Reactor Evaporator" (publication No. CN201110224501.4), in terms of the disclosed ingredients, manufacturing method and beneficial effects, involves a brand name of SA508Gr.3Cl.2, which is a material required for the third-generation nuclear power evaporators. Its production process is forging and the performance indicators are not applicable to the fourth-generation nuclear power.

For the disclosed invention patent titled "Steel For Pressure-Bearing Boundary Parts Of Nuclear Power Plant Evaporators and Manufacturing Method Thereof' (publication No. CN201811165268.5). In terms of the disclosed ingredients, manufacturing method and beneficial effects, mechanical properties involved in this patent can only guarantee the use requirements at the operating ambient temperature of 350°C, no description or guarantee is provided for higher use temperature, and the present invention is definitely described to be used for the steel for the third-generation nuclear power station evaporator and the manufacturing.

The invention patents disclosed above mainly involve metal materials required for the third-generation nuclear power equipment. Compared to the key materials required for the fourth-generation nuclear power technology, the above disclosed metal materials have low parameter requirements such as outlet temperatures of 150°C-350°C, low post-weld heat treatment temperatures (below 620°C), and short holding time (less than 15 h), and cannot meet the needs for the fourth-generation advanced nuclear power plants. Therefore, it is urgent to develop key materials that meet the needs of key equipment of the fourth-generation nuclear power plants.

For this purpose, according to the performance characteristics of the fourth-generation nuclear power steam generator materials that require high internal purity and small anisotropy, and excellent high-temperature strength and toughness and fatigue fracture resistance after post-weld heat treatment at 700°C for 16 h, the present disclosure provides a new material and a new process for key equipment of advanced nuclear power units.

### SUMMARY

In view of the above technical problems, the present disclosure provides a steel plate for an evaporator of an advanced nuclear power unit. According to the present disclosure, a new chemical composition design and appropriate production technology are adopted. On the basis of C, Si and Mn components at low and medium contents, alloy elements of Cr, Mo, Ni, Nb, V, Ti and N are added, and the contents of harmful elements of P, S, Sn and gas of O and H are strictly controlled; combined with unique smelting, rolling and heat treatment processes, a homogeneous steel plate that can withstand 530°C post-weld heat treatment high-temperature strength and has high temperature fatigue, low temperature toughness, and high purity is obtained, meeting manufacturing and use requirements of evaporator for the fourth-generation nuclear power plant. The present disclosure adopts the following technical solutions:

A steel plate for an evaporator of an advanced nuclear power unit, including the following components in percentage by mass: 0.10%-0.14% of C, 0.10%-0.25% of Si, 0.25%-0.50% of Mn, ≤0.006% of P, ≤0.002% of S, 1.80%-2.10% of Cr, 1.00%-1.35% of Mo, 0.80%-1.20% of Ni, 0%-0.04% of Nb, 0.05%-0.10% of V, 0.03%-0.06% of Ti, 0%-0.02% of Alt, 0.001%-0.004% of Ca, 0.01%-0.03% of N, ≤0.001% of Sn, ≤0.0001% of H, and ≤0.0020% of O, and balance of Fe and inevitable impurities, where a high-temperature temper embrittlement resistance coefficient J is equal to (Si+Mn)×(P+Sn)×10⁴≤50.

Further, a yield strength at normal temperature as-supplied state satisfies 407 MPa≤Rₑₗ≤431 MPa, a tensile strength satisfies 573 MPa≤Rₘ≤586 MPa, a tensile strength at 530°C satisfies 422 MPa≤Rₘ≤435 MPa, and HBW≤180; and a tensile strength after post-weld heat treatment at 700°C for 16 h satisfies 407 MPa≤Rₘ (530°C) ≤418 MPa, an impact power KV₂ at -20°C satisfies ≥320J, and a cyclic number at 530°C satisfies ≥1.1 million times.

Further, a composite structure containing ferrite-pearlite (in a content of 5-10%) and tempered bainite is obtained, where fine inclusions A+B+C+D are of ≤ grade 0.5, coarse inclusions A+B+C+D are of grade 0, and banded structure is of grade 0.

The principle for selection of chemical components and reasons for the content setting are as follows:

C: The main solid-solution state C and combined state C in the present disclosure ensure the high-temperature tensile strength of the steel in the heat treatment state and the post-weld heat treatment state, which are also main elements for improving the fatigue strength, but the excessive carbon content is unfavorable for the toughness and the welding performance of the steel. Thus, the present disclosure defines the C content ranging from 0.10% to 0.14%.

Si: Si is a good reducing agent and a good deoxidizing agent in the steel-making process, especially when it is used in combination with Alt, which can obviously improve the deoxidizing capacity of Alt. Si forms a layer of compact oxidation-resistant SiO₂ protection film on surface at high temperature. In addition, Si and Mo are combined to form MoSi₂ which is an intermetallic compound. The atomic combination in the crystal structure of MoSi₂ exhibits the characteristics of coexistence of metal bonds and covalent bonds, showing excellent high-temperature oxidation resistance. Therefore, the Mo/Si ratio of the present disclosure is defined to be 4.05-13.30, ensuring the formation of a certain amount of MoSi₂ structure. However, in the tempering embrittlement temperature range of 350-550°C, excessive silicon content will cause an increase of the tempering embrittlement sensitivity of steel, so the excessive addition of silicon element is not suitable in the present disclosure, and therefore, the Si content range is defined to be 0.10-0.25%.

Mn: In the present disclosure, since the addition of deoxidizing agents such as Si, Alt and the like is small, the addition of Mn compensates for the insufficient deoxidizing effect. In addition, as an alloy element with strong solid solution strengthening capability, Mn is used to improve the matrix strength, but Mn is a main factor influencing the tempering brittleness, which is strictly controlled in the present disclosure. Therefore, the Mn content range is defined to be 0.25-0.50% in the present disclosure.

S and P: As harmful elements in steel, S and P must be strictly controlled to ensure comprehensive indexes such as the purity and J coefficient of steel. The present disclosure defines S≤0.002% and P≤0.006%.

Cr: As a strong carbide-forming element, Cr combines with Fe, Mn, and Mo in steel to form a stable alloy carbide with a structure of M₂₃C₆, where M is a combination of Fe, Mn, Cr, and Mo, ensuring the high-temperature performance in the long-term post-weld heat treatment state; and simultaneously since the affinity effect with oxygen, Cr can form dense metal oxides on metal surface at high temperatures to improve the steel's resistance to high-temperature oxidation and oxidation corrosion. However, excessive Cr content will increase the brittle transition temperature of the steel, so the Cr content range is defined to be 1.80%-2.10% in the present disclosure.

Mo: Mo can improve the hardenability of the steel and ensure the matrix strength of the steel, and meanwhile, Mo is a strong carbide-forming element and can form a stable Mo₂C thermal strengthening phase with carbon elements, which plays a role in strengthening at high temperature. In addition, the steel of the present disclosure is added with more Cr elements and certain Mn elements, which are easy to co-segregate with impurity elements such as P, Sn and the like at the grain boundary, causing high-temperature tempering embrittlement and affecting the high-temperature performance of the steel. However, the effect of Mo is opposite, which promotes P to precipitate in crystal to prevent grain boundary segregation. Therefore, the (Cr + Mn)/Mo is defined to be 1.70-2.50 in the present disclosure, so as to ensure the structural stability and the performance stability of the evaporator steel at the working temperature of 530°C, but excessive Mo content leads to embrittlement of the steel, thus the Mo content range is defined to be 1.00%-1.35% in the present disclosure.

Ni: Ni in the present disclosure mainly improves the plasticity and toughness of steel, but the radiation resistance of the material is reduced by an excessively high Ni content, so the Ni content range is defined to be 0.80%-1.20% in the present disclosure.

Nb: Nb plays a role in refining grains in the present disclosure, and is embodied as an element to be involved or to be added in small amount. Therefore, the Nb content is defined to be 0%-0.04% in the present disclosure.

V: V is added in a large amount in the present disclosure, and one of the main functions is to form stable carbon and nitrogen compound with C and N elements in the long-time high-temperature post-weld tempering treatment process, ensuring the high-temperature strength of the high-temperature postweld heat treatment state. In addition, the addition of the V alloy effectively inhibits the segregation of Cr and Mn elements induced by irradiation in grain boundaries. Therefore, the V content is defined to be 0.05-0.10% in the present disclosure.

Ti: Ti is one of the strong ferrite-forming elements and strongly increases A1 and A3 temperatures of the steel. Ti can improve the plasticity and toughness of steel. Since titanium fixes carbon and nitrogen and forms carbon and titanium nitride, the strength of the steel is improved. After normalizing heat treatment, the crystal grains are refined and carbide is precipitated to obviously improve the plasticity and impact toughness of the steel. Therefore, the Ti content is defined to be 0.03-0.06% in the present disclosure.

Sn: Sn is a residual element in steel, not only influences the purity of the steel, but also is an important element influencing the J coefficient of the temper brittleness, thus Sn must be strictly controlled. The Sn content is defined to be ≤0.001% in the present disclosure.

Alt: The Alt is embodied as an element to be involved or to be added in a small amount in the present disclosure, plays the role of a deoxidizer. Non-addition or small amount of Alt mainly ensures the purity of steel and prevents the generated aluminum oxide from influencing the fatigue performance of steel, so the Alt content is defined to be 0%-0.02% in the present disclosure.

Ca: The inclusions of the present disclosure are spheroidized by Ca, and the MnS inclusions are changed into CaS or composite inclusions containing CaS and the Al₂O₃ type inclusions are changed into calcium aluminate type oxide inclusions. These inclusions are spherical and are distributed in a dispersion manner, which basically do not deform at the rolling temperature of steel and are still spherical after rolling. However, excessive addition of Ca will lead to a large size of formed Ca (O, S) and an increase of the brittleness of steel, becoming a starting point of fracture crack, so that the low-temperature toughness, the extensibility and the weldability of the steel are reduced, and the purity of the steel is reduced. Therefore, the Ca content range is defined to be 0.001-0.004% in the present disclosure.

N: N forms nitride with elements such as Nb, V and the like. Nitride precipitates at the grain boundary, and pin effect of the nitride in the grain boundary refines grains, playing a role in improving the high-temperature strength of the grain boundary. Therefore, the N content is defined to be 0.01%-0.03% in the present disclosure.

H and O: As harmful gases, the existence of H and O will cause many defects. H may cause defects such as white spots or hydrogen embrittlement in steel, seriously affecting the service life of materials and the safety of equipment. O forms brittle non-metallic oxides with Al and Si, affecting the purity and fatigue limit performance of steel, which must be strictly controlled.
Therefore, the O content is defined to be ≤0.0020% and the H content of is defined to be ≤0.0001% in the present disclosure.

In order to achieve the object of the present disclosure, a technical solution is further disclosed, that is, a method for manufacturing the steel plate for an evaporator of an advanced nuclear power unit, comprising steps as follows: pretreatment of molten iron, dephosphorization in converter, decarburization in converter, external refining (LF+RH), slab continous casting, stacking for slow-cooling, cleaning of casting blank, electroslag remelting, slow cooling of electroslag steel ingots, billet steel heating, controlled rolling and controlled cooling, thermal straightening, slow cooling, heat treatment, flaw detection, inspection and testing. The present disclosure includes main steps as follows:
1) Smelting process: Molten steel is smelted in a converter, using high-quality scrap steel and molten iron as raw materials, with a content of the molten iron controlled to be 70-80%. Meanwhile, in order to effectively reduce the content of harmful element P, dephosphorization and decarburization are separately performed in the converter, where the time for dephosphorization oxygen blowing is controlled to be 7-10 min, the time for decarburization oxygen blowing is controlled to be 8-12 min, and the phosphorus mass fraction is ultimately reduced to less than or equal to 0.006%. Deep desulfurization is performed in a LF refining furnace, and the sulfur content is controlled to be less than or equal to 0.002%. Meanwhile, CaSi wires are fed into the steel for calcium treatment, with a wire feeding speed of 200-350 m/min and a wire feeding depth of 1.0-2.0 m below the lower slag layer. This treatment may change the form of non-metallic inclusions and forms fine ball-shaped inclusion points of CaS or calcium aluminate, which increases the equiaxed ratio of the billet steel while purifying the steel, improving the purity of steel, and improving the low-temperature toughness and high-temperature fatigue performance of steel. The thickness of the generated slag layer is 60-90 mm, ensuring that the inclusions float up fully. Degassing is completed in a RH furnace with a net cycle time of 10-15 min and a sedation time before casting of 3-6 min.
2) Casting process: The smelted molten steel is cast, with a superheat degree of 20-30°C, by a conticaster after breaking vacuum to obtain a casting blank. The casting process should be stable and constant speed. The casting blank coming off the production line is stacked for slow cooling, with a stacking time of 24-48 h, and then is destacked at a destacking temperature of below 400°C, preventing cracks in the casting blank caused by rapid cooling.
3) Electroslag remelting process: In order to further improve the purity of steel, homogenize the as-cast structure, and reduce non-metallic inclusions, the electroslag remelting process is introduced, which is crucial for high-temperature fatigue performance and low-temperature toughness of steel. In the present disclosure, remelted electroslag steel ingot of 280-350 mm is rolled to obtain steel plate for an evaporator with a speification of smaller than or equal to 50 mm. After demoulding, the remelted electroslag steel ingot is stacked for 48-72 h for slow cooling, and then is destacked below 400°C for air cooling.
4) Heating process: By controlling the heating process for billet steel, alloy elements are fully solution strengthened and the growth of the original austenite grains is effectively inhibited. A temperature for heating the remelted electroslag steel ingots is controlled to be 1180-1250°C, a heating time is 6-8 h, and a soaking time is 0.5-1.0 h.
5) Controlled rolling and controlled cooling process: An initial rolling temperature in the recrystallization zone is 1050-1150°C, a single-pass deformation rate in the recrystallization zone is 10-14%, each of the first three passes adopt a pass reduction rate of 11-13%, a total deformation rate is ≥50%, and the thickness of an intermediate billet is 2.0-5.0 times that of a finished steel plate. An initial rolling temperautre in the non-recrystallization zone is 850-920°C, a finishing rolling temperature in the non-recrystallization zone is 800-850°C, rolling in the non-recrystallization zone shall not be less than 6 passes, and a cumulative deformation rate in the non-recrystallization zone is ≥50%. After rolling, an accelerated controlled cooling (ACC) process is performed for the rolled steel plate, with an initial cooling temperature of 800-830°C, a self-tempering temperature of 400-500°C, and a cooling rate of 20-25°C/s. By the organic combination of micro-alloying elements of Nb, V, and Ti added to the steel with the elements of C and N, the dispersion strengthening and grain refining effects can be exerted to the maximum extent, and the rolled structure can be refined. A thickness of the finished product after rolling is 20-50 mm.
6) Heat treatment process: In order to obtain a organizational form that meets the demanding performance requirements of the present disclosure, the heat treatment process is finally perfromed on the finished product. The present disclosure adopts multiple heat treatment processes including high-temperature normalizing, secondary normalizing, and high-temperature tempering. The A_{C3} temperature of the steel grade of the present disclosure is about 870°C. The high-temperature normalizing temperature is designed according to A_{C3}+ (80-130) °C, that is, 950°C-1000°C, and the holding time is 0.5 min/mm -1.0 min/mm, then air cooling is performed on the finished product to room tmeprature. This process eliminates grain differences and structural segregation caused by uneven temperature of the rolled piece, ensuring the homogenization of components and performance of the products of the present disclosure. The secondary normalizing is performed at a temperature of 930-960°C with a holding time of 0.5-1.5 min/mm, followed by air cooling to room temperature, and a multi-phase structure with bainite as the main component mixed with ferrite and pearlite is obtained. In order to meet the requirements of high temperature strength and high temperature fatigue performance, the ferrite-pearlite content is controlled to be 5-10%.

In addition, in order to achieve the excellent processing performance and service performance of the product of the present disclosure, the upper limit of tensile strength of material as post-weld heat treatment state shall not exceed 586 MPa according to the allowable design stress, meanwhile, and it is necessary to ensure that the tensile strength as post-weld heat treatment state at 530°C is not less than 422 MPa. Therefore, it is necessary to further adjust and control the structural and performance through precise tempering heat treatment. The present disclosure designs a tempering temperature of 730-760°C and a holding time of 120 min+(1.0-2.0) min/mm. The microstructure obtained under these conditions has good high-temperature stability and does not change essentially after post-weld heat treatment at 700°C for 16 h, ensuring the comprehensive performance of the steel plate after long-term post-weld heat treatment, especially the high-temperature strong plasticity, low-temperature toughness and high-temperature fatigue performance.

The present disclosure has the following advantages:
1. On the basis of medium-low contents of C, Si and Mn components, the contents of harmful elements P, S, Sn and gases O, H are strictly controlled, and the high-temperature tempering embrittlement coefficient is controlled to be below 40. Through the manufacturing process of adding alloy elements Cr, Mo, Ni, Nb, V, Ti and N, a microstructure containing ferrite-pearlite (5%-10%) and tempered bainite is obtained, which has fine inclusions (A+B+C+D) of ≤ grade 0.5, coarse inclusions (A+B+C+D) of grade 0, and the banded structure grade of grade 0, ensuring the radiation resistance and comprehensive mechanical performance of the steel plate for evaporators.
2. The mechanical properties of steel plate for evaporators of advanced nuclear power units obtained through unique production process are as follows: 407MPa≤Rₑₗ≤431MPa and 573MPa≤Rₘ≤586MPa at normal temperature as-supplied state, 422MPa≤Rₘ≤435MPa at 530°C, HBW≤180; a tensile strength at 530°C after post-weld heat treatment at 700°C for 16 h satisfies 407MPa≤Rₘ≤418MPa, and KV₂(-20°C) ≥320J, a cyclic number (530°C)≥1.1 million times. According to the present disclosure, a steel plate for evaporators with a thickness of 20-50mm is obtained, filling in the blank of such products.

### DETAILED DESCRIPTIONS OF THE EMBODIMENTS

To make the objectives, technical solutions, and advantages of the present invention clearer, the following clearly and completely describes the technical solutions in the embodiments of the present invention. Apparently, the described embodiments are merely some rather than all of the embodiments. Based on the embodiments of the present invention, all the other embodiments obtained by those of ordinary skill in the art without inventive effort are within the protection scope of the present invention.

The chemical components of the examples of the present disclosure are shown in Table 1. The corresponding process parameters of the examples are shown in Table 2. The final effects of the microstructure and property of the examples are shown in Table 3. The evaluation results of non-metallic inclusions of the examples are shown in Table 4. The fatigue performances of the examples are shown in Table 5.

**Table 1 Chemical components of the examples (wt.%)**

| Example | C | Si | Mn | P | S | Cr | Mo | Ni | Nb | V | Ti |
|---|---|---|---|---|---|---|---|---|---|---|---|
| 1 | 0.11 | 0.2 | 0.5 | 0.006 | 0.002 | 1.85 | 1.15 | 0.8 | 0.01 | 0.1 | 0.04 |
| 2 | 0.1 | 0.18 | 0.45 | 0.005 | 0.001 | 2.1 | 1.3 | 0.84 | 0.03 | 0.08 | 0.03 |
| 3 | 0.11 | 0.25 | 0.28 | 0.006 | 0.001 | 2 | 1.35 | 1.12 | 0 | 0.06 | 0.06 |
| 4 | 0.12 | 0.11 | 0.42 | 0.005 | 0.001 | 1.8 | 1.05 | 0.95 | 0.04 | 0.05 | 0.04 |
| 5 | 0.14 | 0.22 | 0.31 | 0.005 | 0.002 | 1.9 | 1.25 | 1.2 | 0.02 | 0.08 | 0.05 |
| 6 | 0.13 | 0.13 | 0.4 | 0.006 | 0.001 | 2.04 | 1 | 1.1 | 0.02 | 0.1 | 0.06 |
| 7 | 0.12 | 0.23 | 0.25 | 0.006 | 0.001 | 1.95 | 1.21 | 0.92 | 0.03 | 0.07 | 0.03 |
| 8 | 0.13 | 0.1 | 0.45 | 0.004 | 0.001 | 1.99 | 1.33 | 1.17 | 0 | 0.06 | 0.06 |
| 9 | 0.1 | 0.27 | 0.36 | 0.006 | 0.002 | 1.8 | 1.1 | 0.98 | 0.04 | 0.07 | 0.04 |
| 10 | 0.11 | 0.19 | 0.42 | 0.005 | 0.001 | 2.05 | 1.08 | 1.2 | 0.02 | 0.08 | 0.05 |
| Example | Alt | Ca | N | Sn | O | H | J | Mo/Si | | (Cr+Mn)/Mo | |
| 1 | 0.01 | 0.002 | 0.01 | ≤ 0.001 | 0.0018 | ≤ 0.0001 | 49 | 5.75 | | 2.04 | |
| 2 | 0.02 | 0.001 | 0.03 | | 0.0014 | | 38 | 7.22 | | 1.96 | |
| 3 | 0.01 | 0.003 | 0.01 | | 0.002 | | 36 | 5.4 | 1.69 | | |
| 4 | 0.02 | 0.002 | 0.03 | | 0.0019 | | 32 | 9.55 | 2.11 | | |
| 5 | 0 | 0.001 | 0.02 | | 0.0016 | | 32 | 5.68 | 1.77 | | |
| 6 | 0.02 | 0.004 | 0.02 | | 0.0017 | | 37 | 7.69 | 2.44 | | |
| 7 | 0.02 | 0.001 | 0.01 | | 0.002 | | 37 | 5.26 | 1.82 | | |
| 8 | 0.01 | 0.003 | 0.03 | | 0.0014 | | 28 | 13.3 | 1.83 | | |
| 9 | 0.02 | 0.003 | 0.02 | | 0.0016 | | 44 | 4.07 | 1.96 | | |

**Table 2 Process parameters of the examples**

| Example | 1 | 2 | 3 | 4 | 5 | 6 | 7 | 8 | 9 | 10 |
|---|---|---|---|---|---|---|---|---|---|---|
| Molten iron (mass fraction)/% | 75 | 80 | 75 | 80 | 73 | 77 | 74 | 72 | 71 | 79 |
| Dephosphorization time/min | 9 | 7 | 10 | 8 | 10 | 7 | 8 | 9 | 8 | 10 |
| Decarbonization time/min | 11 | 8 | 10 | 9 | 12 | 11 | 8 | 9 | 11 | 12 |
| CaSi wire feeding speed m/min | 350 | 330 | 220 | 255 | 300 | 205 | 200 | 210 | 280 | 310 |
| CaSi wire feeding depth/m | 2 | 1.5 | 1.3 | 1.7 | 1.7 | 1.1 | 1 | 1.6 | 1.4 | 1.3 |
| Thickness of generated slag layer/mm | 60 | 70 | 90 | 80 | 83 | 74 | 66 | 68 | 77 | 86 |
| Net cycle time/min | 15 | 10 | 10 | 12 | 13 | 14 | 11 | 12 | 14 | 13 |
| Sedation time/min | 3 | 5 | 4 | 3.2 | 4.5 | 3.5 | 5 | 3.7 | 4.2 | 3.6 |
| Superheat/°C | 20 | 25 | 25 | 30 | 23 | 28 | 24 | 27 | 28 | 22 |
| Stacking time for casting blank/h | 38 | 40 | 36 | 24 | 30 | 48 | 42 | 28 | 32 | 45 |
| Destacking temperature for casting blank/°C | 345 | 365 | 388 | 383 | 345 | 337 | 375 | 364 | 313 | 335 |
| Thickness of electroslag steel ingot/mm | 300 | 320 | 340 | 290 | 310 | 280 | 315 | 345 | 350 | 330 |
| Stacking time for electroslag steel ingot/h | 64 | 72 | 52 | 48 | 60 | 55 | 58 | 64 | 66 | 68 |
| Destacking temperature for electroslag steel ingot/°C | 326 | 335 | 365 | 387 | 356 | 339 | 334 | 375 | 395 | 345 |
| Heating temperature for electroslag steel ingot/°C | 1220 | 1200 | 1190 | 1250 | 1180 | 1210 | 1190 | 1220 | 1180 | 1210 |
| Heating time/h | 8 | 6.5 | 7.5 | 7 | 8 | 7 | 6.8 | 8 | 7.4 | 7.2 |
| Soaking time/h | 0.6 | 0.9 | 1 | 0.8 | 0.5 | 0.5 | 0.7 | 0.6 | 0.9 | 1 |
| Initial rolling temperature in recrystallization zone/°C | 1100 | 1140 | 1120 | 1050 | 1150 | 1080 | 1120 | 1070 | 1090 | 1100 |
| Reduction rate of each of the first three passes/% | 12 | 13 | 11 | 11 | 12 | 13 | 13 | 12 | 11 | 13 |
| Total deformation rate in recrystallization zone/% | 67 | 69 | 71 | 64 | 64 | 52 | 68 | 70 | 57 | 73 |
| Thickness ratio of intermediate billet to finished product | 2 | 5 | 4 | 3.5 | 2.8 | 3 | 4.4 | 3 | 3.3 | 3.6 |
| Initial rolling temperature in non-recrystallization zone/°C | 855 | 919 | 910 | 880 | 862 | 866 | 920 | 850 | 879 | 902 |
| Finishing rolling temperature in non-recrystallization zone/°C | 800 | 848 | 845 | 835 | 813 | 812 | 850 | 822 | 838 | 806 |
| Rolling passes in the non-recrystallization zone | 6 | 10 | 9 | 8 | 7 | 7 | 6 | 7 | 8 | 7 |
| Cumulative deformation rate in the non-recrystallization zone/% | 50 | 80 | 72 | 71 | 64 | 67 | 77 | 67 | 70 | 72 |
| Initial cooling temperature/°C | 802 | 829 | 825 | 816 | 805 | 804 | 830 | 800 | 822 | 810 |
| Self-tempering temperature/°C | 497 | 402 | 418 | 445 | 487 | 485 | 500 | 467 | 445 | 400 |
| Cooling rate °C/s | 25 | 20 | 22 | 22 | 24 | 24 | 21 | 22 | 23 | 24 |
| Thickness of finished product/mm | 50 | 20 | 25 | 30 | 40 | 45 | 23 | 35 | 45 | 25 |
| Temperature of high-temperature normalizing/°C | 970 | 980 | 990 | 1000 | 950 | 970 | 955 | 960 | 985 | 995 |
| Holding time of high-temperature normalizing/min/mm | 0.5 | 0.8 | 1 | 0.5 | 1 | 0.8 | 0.6 | 0.7 | 0.9 | 0.7 |
| Temperature of secondary normalizing/°C | 930 | 960 | 940 | 950 | 960 | 940 | 935 | 945 | 955 | 945 |
| Holding time of secondary normalizing/min/mm | 0.5 | 1.5 | 0.7 | 0.8 | 1.3 | 1 | 1.2 | 1.1 | 1.4 | 0.9 |
| Tempering temperature/°C | 740 | 755 | 750 | 760 | 740 | 730 | 750 | 735 | 745 | 735 |
| Holding time of tempering heat treatment/min | 170 | 160 | 170 | 180 | 160 | 165 | 160 | 190 | 165 | 170 |

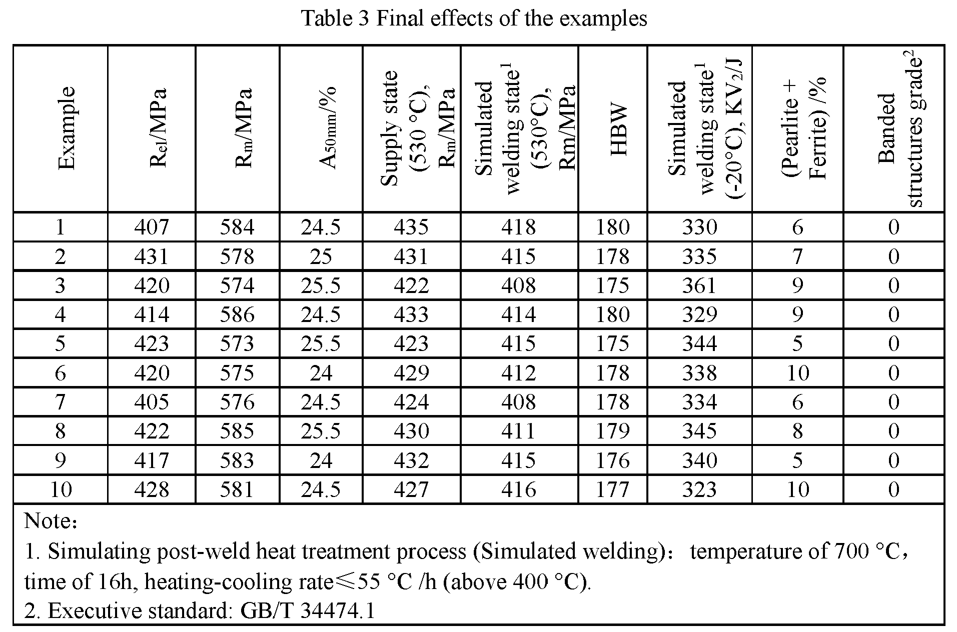

**Table 4 Evaluation results of non-metallic inclusions of the examples**

| Exam ple | Class A | | Class B | | Class C | | Class D | | Diamet er of large size class D inclusi ons |
|---|---|---|---|---|---|---|---|---|---|
| | Fine inclusi ons | Coarse inclusi ons | Fine inclusi ons | Coarse inclusi ons | Fine inclusi ons | Coarse inclusi ons | Fine inclusi ons | Coarse inclusi ons | |
| 1 | 0 | 0 | 0 | 0 | 0 | 0 | 0.5 | 0 | 0 |
| 2 | 0 | 0 | 0 | 0 | 0 | 0 | 0.5 | 0 | 0 |
| 3 | 0 | 0 | 0.5 | 0 | 0 | 0 | 0 | 0 | 0 |
| 4 | 0 | 0 | 0.5 | 0 | 0 | 0 | 0 | 0 | 0 |
| 5 | 0 | 0 | 0 | 0 | 0 | 0 | 0.5 | 0 | 0 |
| 6 | 0 | 0 | 0.5 | 0 | 0 | 0 | 0 | 0 | 0 |
| 7 | 0 | 0 | 0 | 0 | 0 | 0 | 0.5 | 0 | 0 |
| 8 | 0 | 0 | 0.5 | 0 | 0 | 0 | 0 | 0 | 0 |
| 9 | 0 | 0 | 0 | 0 | 0 | 0 | 0.5 | 0 | 0 |
| 10 | 0 | 0 | 0.5 | 0 | 0 | 0 | 0 | 0 | 0 |
| Executive standard: GB/T 10561. | | | | | | | | | |

**Table 5 Fatigue performances of the examples**

| Example | Test temperature/°C | Sample status | Strain ratio | Strain amplitude | Cycle life |
|---|---|---|---|---|---|
| 1 | 530 | Post-weld heat treatment | R=0 | 0-0.0024 | 1151877 |
| 2 | 530 | Post-weld heat treatment | R=0 | 0-0.0024 | 1101454 |
| 3 | 530 | Post-weld heat treatment | R=0 | 0-0.0024 | 1120834 |
| 4 | 530 | Post-weld heat treatment | R=0 | 0-0.0024 | 1200260 |
| 5 | 530 | Post-weld heat treatment | R=0 | 0-0.0024 | 1210600 |
| 6 | 530 | Post-weld heat treatment | R=0 | 0-0.0024 | 1208410 |
| 7 | 530 | Post-weld heat treatment | R=0 | 0-0.0024 | 1116453 |
| 8 | 530 | Post-weld heat treatment | R=0 | 0-0.0024 | 1104640 |
| 9 | 530 | Post-weld heat treatment | R=0 | 0-0.0024 | 1110324 |
| 10 | 530 | Post-weld heat treatment | R=0 | 0-0.0024 | 1108751 |
| 1. Simulating post-weld heat treatment process (Simulated welding): temperature of 700 °C, time of 16h, heating-cooling rate≤55 °C /h (above 400 °C). | | | | | |

As shown in the above results, the steel plate for evaporator of advanced nuclear power units provided by the present disclosure has high internal purity, extremely low content of harmful elements P and S, and a temper embrittlement resistance coefficient J≤50; 407MPa≤Rₑₗ≤431Mpa and 573MPa≤Rₘ≤586Mpa at normal temperature as-supplied state, 422MPa≤Rₘ≤435MPa at 530 °C, fine inclusions (A+B+C+D) of ≤ grade 0.5, coarse inclusions (A+B+C+D) of grade 0, 5%≤(Pearlite + ferrite) ≤ 10%, banded structure grade of grade 0, HBW ≤ 180; 407MPa≤Rₘ(530 °C) ≤418MPa after post-weld heat treatment at 700 °C for 16 h, KV₂(-20 °C) >_320J, and cyclic number at 530°C≥1.1 million times.

At last, it should be noted that the above various embodiments are merely intended to illustrate the technical solution of the present invention and not to limit the same; although the present invention has been described in detail with reference to the foregoing embodiments, it should be understood by those ordinary skilled in the art that the technical solutions described in the foregoing embodiments can be modified or equivalents can be substituted for some or all of the technical features thereof; and the modification or substitution does not make the essence of the corresponding technical solution deviate from the scope of the technical solution of each embodiment of the present invention.

## Claims

1. A steel plate for an evaporator of an advanced nuclear power unit, comprising the following components in percentage by mass: 0.10%-0.14% of C, 0.10%-0.25% of Si, 0.25%-0.50% of Mn, less than or equal to 0.006% of P, less than or equal to 0.002% of S, 1.80%-2.10% of Cr, 1.00%-1.35% of Mo, 0.80%-1.20% of Ni, 0%-0.04% of Nb, 0.05%-0.10% of V, 0.03%-0.06% of Ti, 0%-0.02% of Alt, 0.001%-0.004% of Ca, 0.01%-0.03% of N, less than or equal to 0.001% of Sn, less than or equal to 0.0001% of H, less than or equal to 0.0020% of O, and balance of Fe and inevitable impurities, wherein a high-temperature temper embrittlement resistance coefficient J is equal to (Si+Mn)×(P+Sn)×104 which less than or equal to 50.

2. The steel plate for an evaporator of an advanced nuclear power unit according to claim 1, wherein a yield strength at normal temperature as-supplied state satisfies 407MPa≤Rel≤431MPa, a tensile strength satisfies 573MPa≤Rm≤586MPa, and a tensile strength at 530 °C satisfies 422MPa≤Rm≤435MPa;
a tensile strength at 530°C after post-weld heat treatment at 700°C for 16 h satisfies 407MPa≤Rm≤418MPa, an impact power KV2 at -20°C is higher than or equal to 320J, and a cyclic number at 530°C is more than or equal to 1.1 million times.

3. The steel plate for an evaporator of an advanced nuclear power unit according to claim 1, wherein a composite structure containing ferrite-pearlite and tempered bainite is obtained, wherein the content of ferrite-pearlite is 5-10%, fine inclusions A+B+C+D are of ≤ grade 0.5, coarse inclusions A+B+C+D are of grade 0, and banded structure grade is of grade 0.

4. The steel plate for an evaporator of an advanced nuclear power unit according to claim 1, wherein Mo/Si is 4.05-13.30, and (Cr+Mn)/Mo is 1.70-2.50.

5. A method for manufacturing the steel plate for an evaporator of an advanced nuclear power unit of any one of claims 1 to 4, comprising a smelting process, a casting process, an electroslag remelting process, a heating process, a rolling process, and a heat treatment process, with the following steps of:
1) smelting process: smelting molten steel in a converter, wherein
dephosphorization and decarburization are separately performed in the converter, wherein a time for dephosphorization oxygen blowing ranges from 7 to 10 min, a time for decarburization oxygen blowing ranges from 8 to 12 min, and the phosphorus mass fraction is ultimately reduced to less than or equal to 0.006%; and deep desulfurization treatment is performed in a LF refining furnace, wherein the sulfur content is controlled to be less than or equal to 0.002%, while feeding CaSi wires into the steel for calcium treatment;
a thickness of a generated slag layer is 60-90 mm;
degassing is completed in a RH furnace with a net cycle time of 10-15 min and a sedation time before casting of 3-5 min;
2) casting process: casting, with a superheat degree of 20-30°C, the smelted molten steel by a conticaster at a constant speed after breaking vacuum to obtain a casting blank; stacking the casting blank coming off a production line for slow cooling, and then destacking at a preset temperature;
3) electroslag remelting process: rolling with 280-350 mm remelted electroslag steel ingots to obtain a steel plate for an evaporator with a specification of smaller than or equal to 50 mm; stacking the remelted electroslag steel ingots after demoulding, and then destacking at a preset temperature;
4) heating process: controlling a temperature for heating the remelted electroslag steel ingots to be 1180-1250°C, a heating time to be 6-8 h, and a soaking time to be 0.5-1.0 h;
5) rolling process: rolling with an initial rolling temperature of 1050-1150°C in the recrystallization zone, a single-pass deformation rate of 10-14% in the recrystallization zone, a total deformation rate of ≥50%, and a thickness of an intermediate billet of 2.0-5.0 times that of a finished steel plate, rolling with an initial rolling temperature of 850-920 °C in the non-recrystallization zone, a finishing rolling temperature of 800-850 °C in the non-recrystallization zone, and a cumulative deformation rate of ≥50% in the non-recrystallization zone, wherein a thickness of the finished product after rolling is 20-50 mm;
6) heat treatment process: performing high-temperature normalizing at a temperature of Ac3+(80-130) °C, with a holding time of 0.5-1.0 min/mm, and then performing air cooling to room temperature;
performing secondary normalizing at a temperature of 930-960°C, with a holding time of 0.5-1.5 min/mm, and then performing air cooling to room temperature; and
performing high-temperature tempering heat treatment.

6. The manufacturing method according to claim 5, wherein in the smelting process, scrap steel and molten iron are used as raw materials, and a content of the molten iron is controlled to be 70-80%; and
during the calcium treatment, a wire feeding speed is 200-350 m/min, and a wire feeding depth is 1-2 m below the slag layer.

7. The manufacturing method according to claim 5, wherein in the casting process, a stacking time is 24-48 h, and a destacking temperature is below 400°C; in the electroslag remelting process, a stacking time after the electroslag steel ingots are demoulded is 48-72 h, and the destacking is performed below 400°C for air cooling.

8. The manufacturing method according to claim 5, wherein in the controlled rolling and controlled cooling process, each of the first three passes in the recrystallization zone adopts a pass reduction rate of 11-13%, and the rolling in the non-recrystallization zone is not less than 6 passes.

9. The manufacturing method according to claim 5, wherein in the controlled rolling and controlled cooling process, a post-rolling accelerated controlled cooling process is performed, with an initial cooling temperature of 800-830°C, a self-tempering temperature of 400-500°C, and a cooling rate of 20-25 °C/S.

10. The manufacturing method according to claim 5, wherein the high temperature tempering heat treatment is performed at a tempering temperature of 730-760°C and a holding time of 120 min + 1.0-2.0 min/mm.
